Europäisches Patentamt

European Patent Office

Office européen des brevets

(19)

(11) Numéro de publication: **0 259 201**
**B1**

(12) **FASCICULE DE BREVET EUROPEEN**

(45) Date de publication du fascicule du brevet:
23.05.90

(51) Int. Cl.⁵: **B60N 2/00**

(21) Numéro de dépôt: 87401772.6

(22) Date de dépôt: 29.07.87

(54) **Structure d'assise, notamment pour siège à dossier réglable.**

(30) Priorité: 14.08.86 FR 8611757

(43) Date de publication de la demande:
09.03.88 Bulletin 88/10

(45) Mention de la délivrance du brevet:
23.05.90 Bulletin 90/21

(84) Etats contractants désignés:
AT BE CH DE ES GB IT LI LU NL SE

(56) Documents cités:
US-A- 3 544 164
US-A- 3 594 041
US-A- 3 742 532
US-A- 4 218 091

(73) Titulaire: ECIA - EQUIPEMENTS ET COMPOSANTS
POUR L'INDUSTRIE AUTOMOBILE, F-25400 Audincourt
(Doubs)(FR)

(72) Inventeur: **Fourrey Francois, 34 rue du Petit Chênois,
F-25200 Montbeliard(FR)**
Inventeur: **Deley Serge, 1 rue d'Audincourt,
F-25230 Seloncourt(FR)**

(74) Mandataire: **Polus, Camille et al, c/o Cabinet
Lavoix 2, Place d'Estienne d'Orves, F-75441 Paris
Cedex 09(FR)**

ACTORUM AG

## Description

La présente invention concerne une structure d'assise de siège et notamment de siège de véhicule automobile qui est tout particulièrement adaptée aux sièges munis d'un dossier à inclinaison réglable commandée par un dispositif de réglage monté sur l'un de ses côtés.

Les sièges à dossier réglable généralement utilisés actuellement comportent deux dispositifs de réglage de l'inclinaison montés chacun de l'un des côtés du siège et entraîné simultanément par un même organe de commande. Il est bien connu toutefois que cette disposition pose aux constructeurs des problèmes de réalisation car les deux dispositifs doivent être reliés entre eux de manière précise de façon que leur déplacement soit rigoureusement synchronisé. On est donc amené dans un certain nombre de cas, notamment pour des raisons économiques, à n'utiliser qu'un seul dispositif de réglage de la position du dossier qui par suite est monté sur l'un des côtés du siège, un simple axe d'articulation reliant les armatures du dossier et du siège de l'autre côté.

L'inclinaison du dossier peut ainsi être réglée de manière efficace mais malheureusement le siège a tendance à se déformer lorsqu'il est soumis à un effort exercé vers l'arrière sur le sommet du dossier. En effet, cet effort est transmis de façon dissymétrique au plancher par l'intermédiaire de la structure d'assise, de sorte qu'il tend à provoquer un vrillage de celle-ci, c'est à dire un déplacement angulaire relatif entre le cadre de contour de l'assise et un élément de liaison au plancher relié à ce cadre par des goussets. Ces goussets sont alors soumis à un effort de torsion important qui les détériore rapidement.

La présente invention a pour but de remédier à cet inconvénient en fournissant une structure d'assise qui soit à la fois légère, rigide et peu déformable même sous l'action d'un effort exercé ver l'arrière sur le sommet du dossier.

Cette invention a en effet pour objet, une structure d'assise qui est constituée par un élément hélicoïdal dont les spires forment successivement le cadre de contour de l'assise et l'organe de liaison au plancher et qui est muni à l'une de ses extrémités de moyens d'articulation sur le dossier.

La forme hélicoïdale de l'élément de la structure d'assise, qui est en outre de préférence réalisée au moyen d'un tube, assure une grande rigidité à cette structure qui s'oppose d'autant plus à l'effort de vrillage que celui-ci tend à dérouler l'hélice qu'elle forme.

Bien entendu les spires supérieure et inférieure de l'hélice sont reliées entre elles par des goussets, mais ceux-ci n'ont plus à subir les efforts de torsion.

La description ci-dessous d'un mode de réalisation, donné à titre d'exemple non limitatif et représenté aux dessins annexés fera d'ailleurs ressortir les avantages et caractéristiques de l'invention.

Sur ces dessins :

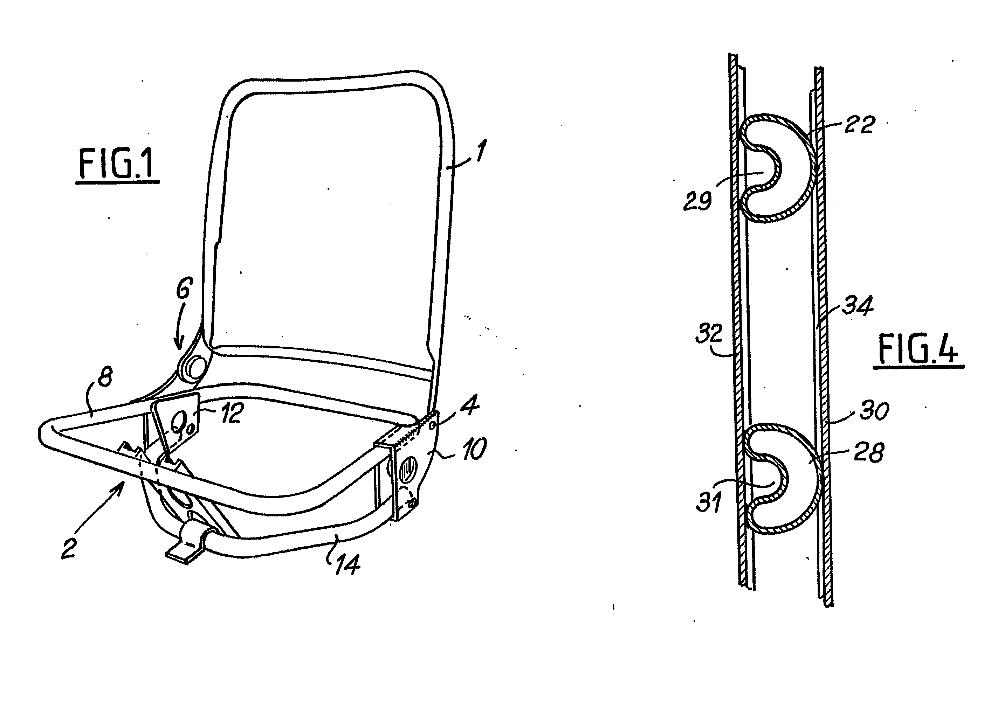

- la Fig. 1 est une vue schématique, en perspective, d'un siège à dossier réglable comportant une structure d'assise classique :
- la Fig. 2 est une vue en perspective à plus grande échelle, d'un siège comportant une structure d'assise selon l'invention, vue de l'avant du siège ;
- la Fig. 3 est une vue en perspective de la structure d'assise vue de l'arrière du siège ;
- la Fig. 4 est une vue en coupe suivant la ligne IV-IV de la Fig. 3.

Comme le montre les dessins, l'invention est tout particulièrement destinée aux sièges à dossier réglable et notamment aux sièges de véhicule automobile dont le dossier comporte un cadre d'armature 1 destiné à supporter un treillis et à être recouvert par un rembourrage (non représenté). Ce cadre 1 est relié à une structure d'assise 2, d'un côté par un simple axe d'articulation 4 et de l'autre par un dispositif de réglage de son inclinaison 6.

La structure d'assise 2 comporte également un cadre d'armature 8 qui est fermé et relié sur deux côtés latéraux opposés par des goussets, respectivement 10 et 12, à un élément 14 de liaison au plancher du véhicule.

L'axe 4 d'articulation entre le dossier et l'assise traverse de préférence le gousset correspondant 10, mais peut bien entendu également si désiré traverser le cadre 8 lui même.

Dans tous les cas un effort exercé vers l'arrière sur le sommet du dossier, c'est à dire sur le sommet du cadre 1 tend à faire basculer ce cadre, c'est à dire à pousser vers l'avant sa partie inférieure. Toutefois, comme cette partie inférieure est retenue très solidement par le dispositif de réglage de l'inclinaison 6, tandis que l'axe d'articulation 4 oppose une résistance nettement moindre, le cadre 8 tend à se déplacer angulairement par rapport à l'élément 4 de liaison au plancher, de sorte que l'ensemble de la structure d'assise subit un effet de vrillage et que les goussets 10 et 12 sont soumis à un effort de torsion important qui les détériore rapidement.

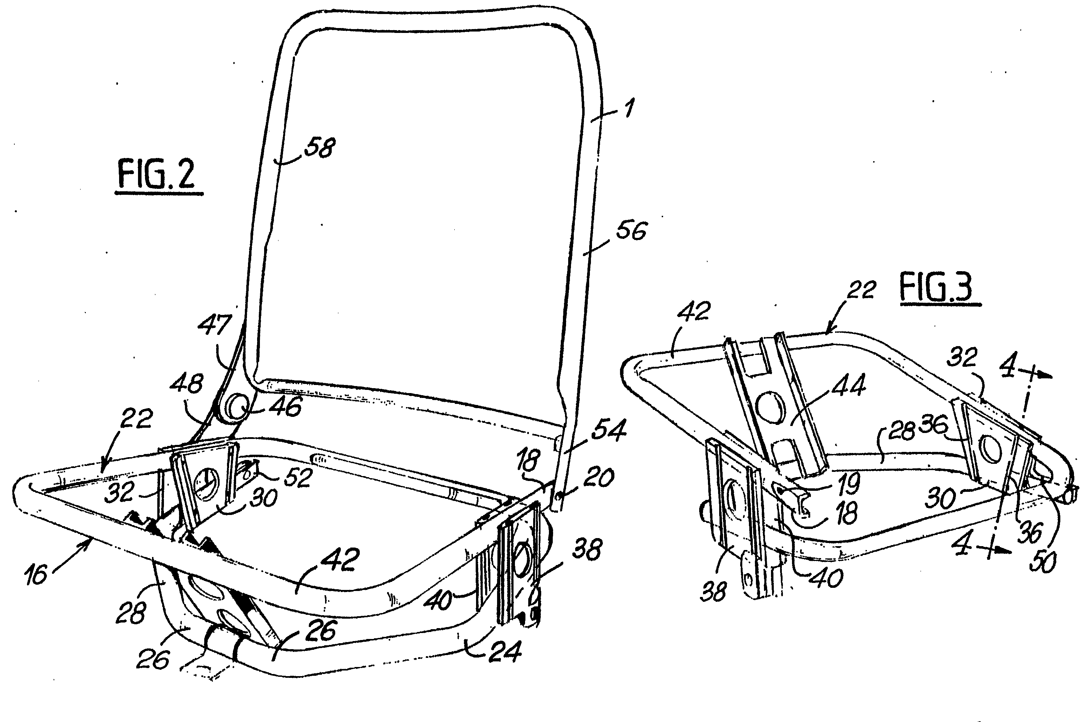

Pour remédier à cet inconvénient la structure d'assise selon l'invention représentée sur les Figs. 2 et 3 est formée par un élément tubulaire 16 qui est sensiblement hélicoïdal et dont l'extrémité supérieure 18 est percée d'un trou 19 de passage d'un axe d'articulation 20 permettant sa liaison à l'extrémité inférieure d'un montant latéral du cadre 1 du dossier.

A partir de cette extrémité 18 une spire supérieure constitue un cadre de contour d'assise 22 qui s'incline progressivement vers le bas et qui est prolongée par une portion de spire 24 jusqu'à une portion centrale 26 de contact avec le plancher du véhicule. La portion extrême 28 de l'élément hélicoïdal 16 se rapproche ensuite légèrement du cadre de contour d'assise 22 pour être fixée à celui-ci au moyen de deux goussets respectivement 30 et 32.

De préférence les goussets 30 et 32 sont constitués chacun par une tôle plate munie de deux nervures 34, 36 en saillie sur l'une de leur face et sont placés de part et d'autre des deux tubes qui constituent le cadre 22 et la portion 28 de l'élément hélicoïdal de façon que leurs nervures 34 et 36 soient en contact avec ces tubes. Par ailleurs, ces tubes sont localement enfoncés en 29 et 31, ce qui accroît leur rigidité et facilite leur soudure sur les deux goussets puisqu'ils sont, comme le montre la Fig. 4, soudés le long d'une génératrice sur le gousset 30 et le long de deux génératrices sur le gousset 32.

L'extrémité supérieure 18 de l'élément hélicoïdal 16 est également reliée à la spire inférieure 24 au moyen de deux goussets, respectivement 38 et 40 soudés de part et d'autre de ces deux éléments. Les deux goussets 38 et 40 comportent de préférence, comme les goussets 30 et 32, des nervures en saillie en regard des tubes qui facilitent leur soudure.

De même, les portions avant 26 et 42 de la spire inférieure et du cadre de contour d'assise 22 sont reliées entre elles par une tôle 44 de section en U qui est partiellement évidée.

La structure d'assise ainsi réalisée est destinée non seulement à être reliée à l'armature 1 du dossier au moyen de l'axe d'articulation 20 par son extrémité supérieure 18 mais également à être reliée à l'autre côté du dossier, par l'intermédiaire d'un dispositif de réglage de l'inclinaison de ce dernier indiqué schématiquement en 46 sur la Fig.2. Ce dispositif est porté par deux flasques respectivement 47 et 48 dont l'un est fixé sur le tube d'armature 1 tandis que l'autre est fixé sur la structure d'assise 2, par l'intermédiaire du gousset 32, de préférence au moyen de deux organes de fixation dont l'un traverse à la fois le gousset 32 et le tube du cadre 22, tandis que l'autre traverse une patte 50 de prolongement du gosset 32 et l'extrémité 52 de l'élément hélicoïdal 16.

Lorsqu'un effort est exercé vers l'arrière sur le sommet du tube d'armature 1, c'est à dire sur le sommet du dossier, la partie inférieure 54 du tube d'armature 1 qui porte l'axe d'articulation 20 tend à se déplacer vers l'avant du siège en poussant l'extrémité 18 de l'élément hélicoïdal 16 ce qui tend à dérouler cet élément hélicoïdal. Or, cet élément est de préférence réalisé en un tube qui résiste bien à la compression de sorte qu'il oppose à l'effort exercé par le dossier une résistance importante qui empêche le déplacement de la partie inférieure 54 et suprime ainsi tout risque de vrillage de la structure d'appui. L'élément résistant 16 est ainsi seul sollicité par l'effort exercé par le tube du dossier, tandis que les goussets 30, 32, 38 et 40 n'ont qu'à assurer la liaison entre les deux parties de l'assise. Ces goussets sont par suite de préférence réalisés en tôle relativement mince et ils peuvent comporter, comme représenté, des évidements qui les allègent.

Comme l'élément hélicoïdal 16 est lui même plus léger que la superposition classique d'un cadre de contour d'assise et d'un élément de liaison au plancher, l'ensemble de la structure selon l'invention est à la fois nettement plus légère que la structure habituelle et moins déformable. Elle est également plus facile à réaliser et par suite moins couteuse que les structures classiques, de sorte qu'elle est particulièrement adaptée aux sièges qui, pour des raisons d'économie, ne comportent qu'un seul dispositif de réglage de l'inclinaison du dossier situé sur l'un des côtés de celui-ci.

Bien entendu, le dossier associé à une structure d'assise selon l'invention peut comporter un tube d'armature 1 simplement recourbé en U ou, comme représenté sur les dessins, un tube d'armature qui est replié sur lui même pour former un cadre sensiblement fermé. L'un 56 des montants de ce cadre est alors prolongé par le bras 54 qui porte l'axe d'articulation 20, tandis qu'à l'opposé l'autre montant 58 supporte le flasque 47 du dispositif de réglage de l'inclinaison.

De même la structure d'assise selon l'invention pourrait être utilisée avec un siège à dossier fixe ou même un siège muni de deux dispositifs de réglage reliés entre eux et à une même commande.

## Revendications

1. Structure d'assise (16) tout particulièrement adaptée aux sièges comportant un dossier inclinable commandé par un dispositif de réglage (46) monté sur un seul de ses côtés, caractérisée en ce qu'elle comporte un élémente hélicoïdal (16) dont les spires forment successivement un cadre de contour d'assise (22) et un organe (24) de liaison au plancher, et qui est muni à l'une de ses extrémités de moyens d'articulation (20) sur le dossier.

2. Structure d'assise suivant la revendication 1, caractérisée en ce que l'élément hélicoïdal (16) est un élément tubulaire.

3. Structure d'assise suivant les revendications 1 et 2, caractérisée en ce que les spires (22 et 24-28) de l'élément tubulaire (16) sont reliées entre elles par des goussets (30, 32 et 38, 40) de chaque côté du siège.

4. Structure d'assise selon la revendication 3, caractérisé en ce que les goussets (30, 32; 38, 40) sont fixés à proximité de chacune des extrémités supérieure (18) et inférieure (52) de l'élément hélicoïdal (16).

5. Structure d'assise suivant l'une des revendications 3 et 4, caractérisée en ce que les goussets (30, 32; 38, 40) comportent des nervures (34, 36) en saillie en direction de l'élément hélicoïdal (16) et sont soudés sur cet élément à voisinage de ces nervures.

6. Structure d'assise suivant l'une des revendications précédentes, caractérisée en ce que l'élément hélicoïdal (16) est incliné progressivement vers le bas dans toute sa portion constituant le cadre de contour d'assise (22) et la première partie (24) de l'organe de liaison au plancher, mais se redresse légèrement en direction du cadre de contour d'assise à partir d'une partie centrale (26) de contact avec le plancher.

## Patentansprüche

1. Sitzgestell, insbesondere geeignet für Sitze, die eine verstellbare Rückenlehne aufweisen die durch eine Einstellvorrichtung (46) gesteuert wird, die an einer einzigen seiner Seiten befestigt ist, dadurch gekennzeichnet, daß das Sitzgestell ein schraubenförmiges Element (16) umfaßt, dessen Windungen aufeinanderfolgend einen Sitzumfangsrahmen (22) und ein Verbindungselement (24) zum Boden bilden, das an einem seiner Enden mit einer Gelenkverbindung (20) zur Rückenlehne versehen ist.

2. Sitzgestell nach Anspruch 1, dadurch gekennzeichnet, daß das schraubenförmige Element (16) ein Rohrelement ist.

3. Sitzgestell nach Anspruch 1 und 2, dadurch gekennzeichnet, daß die Windungen (22, 24, 28) des Rohrelements (16) zwischen sich durch Winkelbleche (30, 32 und 38, 40) an jeder Seite des Sitzes verbunden werden.

4. Sitzgestell nach Anspruch 3, dadurch gekennzeichnet, daß die Winkelbleche (30, 32 und 38, 40) der Nachbarschaft eines jeden oberen (18) und unteren Endes (52) des schraubenförmigen Elements (16) befestigt sind.

5. Sitzgestell nach einem der Ansprüche 3 und 4, dadurch gekennzeichnet, daß die Winkelbleche (30, 32; 38, 40) Rippen (34, 36) aufweisen, die in Richtung des schraubenförmigen Elements (16) vorstehen und diesem Element in der Nachbarschaft der Rippen verschweißt sind.

6. Sitzgestell nach einem der vorausgehenden Ansprüche, dadurch gekennzeichnet, daß das schraubenförmige Element (16) in seinem ganzen Abschnitt, der den Sitzumfangsrahmen (22) und den ersten Teil (24) des Verbindungselements zum Boden bildet, zunehmend nach unten geneigt ist, aber sich ausgehend von einem mittleren Abschnitt (26) der Bodenberührung leicht in Richtung des Sitzumfangsrahmens wieder aufrichtet.

## Claims

1. A seat structure (16) which is particularly adapted for seats comprising an inclinable back rest which is controlled by an adjusting device (46) mounted on one of its sides only, characterised in that it comprises a helical element (16) whose turns form in succession a seat contour frame (22) and a member (24) for connection to a floor, one end of which element being provided with means for articulation (20) on the back rest.

2. A seat structure as claimed in claim 1, characterised in that the helical element (16) is a tubular element.

3. A seat structure as claimed in claims 1 and 2, characterised in that the turns (22 and 24; 28) of the tubular element (16) are connected to one another by gussets (30, 32 and 38, 40) on either side of the seat.

4. A seat structure as claimed in claim 3, characterised in that the gussets (30, 32; 38, 40) are fixed in the vicinity of each of the upper (18) and lower (52) ends of the helical element (16).

5. A seat structure as claimed in either of claims 3 and 4, characterised in that the gussets (30, 32; 38, 40) comprise ribs (34, 36) which project in the direction of the helical element (16) and are welded onto said element in the vicinity of the ribs.

6. A seat structure as claimed in any of the above claims, characterised in that the helical element (16) is progressively downwardly inclined in all of its part constituting the seat contour frame (22) and the first part (24) of the member for connection to the floor, but rises slightly in the direction of the seat contour frame starting from a central portion (26) of contact with the floor.

**FIG.1**

6

8

2

12

4

10

14

1

22

29

32

34

30

28

31

**FIG.4**

EP 0 259 201 B1

FIG.2

FIG.3